# EUROPEAN PATENT APPLICATION

(11) **EP 3 136 316 A1**
(43) Date of publication of application: **01.03.2017**
(21) Application number: 16162976.1
(22) Date of filing: 30.03.2016
(51) Int. Cl.: G06Q 10/08

(54) **SYSTEM AND METHOD FOR FINDING AND LOCATING ITEMS**

(30) Priority: 26.08.2015 HK 15108297
(71) Applicant: OSCL Pacific Ltd., Quarry Bay (HK)
(72) Inventor: LEE, Hui Ling, Quarry Bay (HK)
(74) Representative: Lind, Robert

(57) **Abstract**

A system for finding and locating items, including an electronic tag adapted to be attached to the item, a tag reading device for reading the electronic tag, and a server. The server is adapted to communicate with the tag reading device via network connections. The tag reading device is adapted to search for and locate items within a predetermined range, and to determine the location information of the item according to the detected signal intensity sent by the electronic tag on the item. The location information is sent through the network connection to the server, and the server operates in the database and adds the location information on the original data format of the database. The present invention can effectively find items that are needed among a lot of items, and can determine the distance and position of the items according to parameters like signal strength. Such location information can be added to the inventory results and are added without affecting the original data format used by the client.

## Description

### Field of Invention

The present invention relates to the field of inventory management and stocktaking, and in particular to a system and method for taking stock of assets, equipments, or items in warehouse.

### Background Information

The concept of "Industry 4.0" is the forth industrial revolution orientated by the intelligent manufacturing which aims at transforming the manufacturing industry to an intelligent one through fully utilizing the combination of the information and communication technologies and Cyber-Physical System. RFID (Radio Frequency Identification) application is one type of message retrieving methods used in the foremost end of intelligentialization. By making use of data fetched through RFID, the database and information center located at the back-end of the Internet of Things may instantaneously grasp new information as well as provide big data for an efficient processing. The creation of RFID used in inventory management and stocktaking, is exactly the basic requirement for achieving in Industrial 4.0 or Internet of Things the timely transmission of information, the accuracy of information, and the automation of information. It will also enable ERP or MES system of companies or factories to effectively understand and apply such data information.

As it is neither possible nor desirable for the internal inventory list format in the clients' company that have been used for many years to be modified along with the introduction of RFID equipments, it is the supplier of RFID stocktaking system who should modify its file format in order to comply with those used for assets in the client's company before selling the RFID system to the client. Therefore, the supplier of RFID stocktaking system must modify the original software to comply with the asset inventory list format commonly adopted by clients for the purposes of different clients every time, in order to enable the system software to recognize the asset list from the newly served clients to complete the inventory or asset stocktaking by uploading or downloading the asset files from clients. This kind of modification usually involves modification to the software program. However, as tests must be done every time after modifications are made to ensure the compatibility and normal functionality of the software, it creates much burdens both in the time spent and manpower cost incurred during the modification work for the system.

### Summary of Invention

Therefore, embodiments in the present invention provide an improved system and method used for asset, equipment or goods inventory and searching in a company, a warehouse or other places to overcome the above-mentioned technical problems.

In one aspect, the present invention provides a system for searching and locating an item, which includes an electronic tag adapted to be attached to an item; a tag reader used for reading the electronic tag; and a server. The server is configured for communicating with the tag reader through a network connection. The tag reader is configured for searching and locating the item within a predetermined area and determining the location information of the item through the signal strength transmitted by the electronic tag of the detected items. The location information is transmitted to the server through the network connection. The server operates on the database and additionally adds the location information based on the original data format in the database.

Preferably, the tag reader further contains a memory storing a list of items that requiring stocktaking within a predetermined area.

More preferably, according to the transmitted signal strength of the electronic tag of the item, the tag reader sorts at least a portion of the items in the list of items according to the distance between each one of the at least a portion of the items and the tag reader.

In one implementation, the tag reader is configured to instantaneously detect the location of the item and feedback its location to the user through a user output device.

According to one variation of the implementation, the user output device further includes a speaker or a buzzer, and the output device reminds the user according to the distance between the item and the tag reader using sounds at different frequencies or in different volumes.

According to another variation of the implementation, the user output device further includes a display screen, and the output device reminds the user according to the distance between one of the items and the tag reader by using different colors or symbols.

In another implementation, the tag reader is configured to detect if the item is located on a predetermined location.

Preferably, when the tag reader detects that the item is not located on the predetermined location, the tag reader reminds the user and prompts if there is a need to modify a location of placement.

According to one variation, the rag reader is a mobile phone including a RFID module, a handheld RFID reader, or a fixed RFID reader.

According to one variation, the system includes a plurality of tag readers located at different geographic locations, and the tag readers are used to take stock of items located in different storage space.

According to one variation, the different storage space includes factories or branches possessed by a single user in different countries or cities.

According to one variation, the location information further contains the last search time or search status results of the item.

In another aspect of the present invention, there is provided a method for searching and locating an item, which includes the steps of searching the item by reading an electronic tag attached to the item within a predetermined area; determining a location information of the item through detecting the signal strength transmitted by the electronic tag on the item; and transmitting the location information to the server through a network connection. The server operating on the database and additionally adds the location information based on the original data format in the database.

Preferably, the tag reader further contains a memory storing a list of items that requiring stocktaking within a predetermined area.

More preferably, according to the transmitted signal strength of the electronic tag of the item, the tag reader sorts at least a portion of the items in the list of items according to the distance between each one of the at least a portion of the items and the tag reader.

In one implementation, the tag reader is configured to instantaneously detect the location of the item and feedback its location to the user through a user output device.

According to one variation of the implementation, the user output device further includes a speaker or a buzzer, and the output device reminds the user according to the distance between the item and the tag reader using sounds at different frequencies or in different volumes.

According to another variation of the implementation, the user output device further includes a display screen, and the output device reminds the user according to the distance between one of the items and the tag reader by using different colors or symbols.

In another implementation, the tag reader is configured to detect if the item is located on a predetermined location.

Preferably, when the tag reader detects that the item is not located on the predetermined location, the tag reader reminds the user and prompts if there is a need to modify a location of placement.

According to one variation, the rag reader is a mobile phone including a RFID module, a handheld RFID reader, or a fixed RFID reader.

According to one variation, the system includes a plurality of tag readers located at different geographic locations, and the tag readers are used to take stock of items located in different storage space.

According to one variation, the different storage space includes factories or branches possessed by a single user in different countries or cities.

According to one variation, the location information further contains the last search time or search status results of the item.

The present invention searches and locates items by replacing traditional manual labor with RFID technologies. As RFID is a near field communication technology, the present invention can effectively find out the required item among multiple items and ascertain the near and far locations of the items according to parameters such as signal strength. This kind of location results can be feedback to the stocktaking staff through electronic interfaces in real time. Besides, the RFID reading device held by the stocktaking staff can transmit read data to the remote sever through network connections, while the actual data collection and comparison work are done by the server. The server then adds the check results to the original asset list from the clients without damaging the original structure of the asset list.

The present invention can be generally used in such areas as related to equipments, materials and item inventory in a company, a factory and freight management. During the procedure when the industry takes stock of items through searching and locating the items, there is no longer any need to search and locate the items by using traditional manual stocktaking methods. Rather, the RFID equipment according to the present invention can be used for quick and accurate locating, and the data is then uploaded to the server for processing. This kind of design not only can greatly reduce labor cost, but also it enables the same company to simultaneously take stock of items at locations in different geographical sites while collectively processing them in the server end, which increases the efficiency of stocktaking and decreases chances of possible mistakes and omissions.

### Brief Description of Drawings

The properties and advantages in the present invention can be further understood by referring to the remaining parts and figures of the specification and the reference numbers for the same component in these figures are the same. Under some circumstances, subsidiary tags are placed following some reference numbers and hyphens to show one among many similar elements. When a certain mentioned reference number does not specify an already existing subsidiary reference number, it means all these similar components.
Figure 1 illustrates a simplified schematic diagram for a system of searching and locating items according to one embodiment in the present invention.
Figure 2 illustrates the software module diagram for a system of searching and locating items according to one embodiment in the present invention.
Figure 3 illustrates a schematic diagram for the reading and modification from software modules according to Figure 2 to the asset equipment list in database from clients.
Figure 4 illustrates flow chart for a system of searching and locating items according to one embodiment in the present invention.
Figure 5 illustrates the software module diagram for a system of searching and locating items according to one embodiment in the present invention, wherein it contains a reader for items and tags locating in many different physical sites.

### Detailed Description of Preferred Embodiment

Embodiments in the present invention adopt RFID technologies to facilitate stocktaking and locating items. Other different merits and advantages provided by each embodiment in the present invention can be readily obtained from the following descriptions.

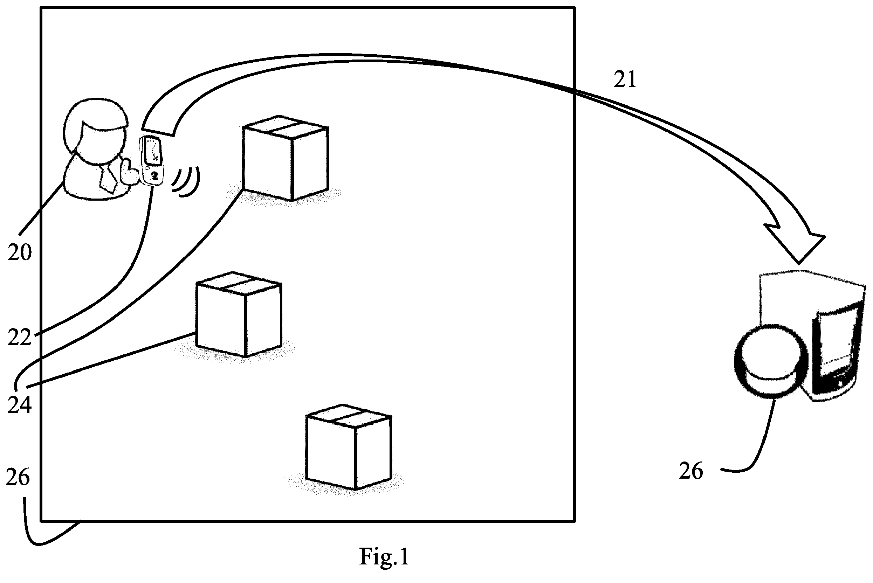

Referring to Figure 1, the present invention provides a system used for taking stock of assets and searching assets or items. The system contains a RFID tag reader **22**, either as a handheld type or as a fixed type. The tag reader **22** can also be a mobile phone attached with a RFID module and a RFID antenna to achieve the same functions as the RFID reader. The tag reader **22** is configured with a circuit and an antenna (not shown) for the communication with RFID tags as well as an interface for additional communication with a remote server **26**, for example interface cards such as wired network, Wi-Fi, Bluetooth or mobile telephone network (not shown). The server **26** is located on the other end of the network, and is adapted to connect to the RFID tag reader **22** through the above-mentioned various networks **21** including the Internet to obtain data read by RFID tag reader. The antenna in the tag reader **22** communicates with RFID tags attached on one or more items **24**, and transmits the received data such as the unique identification code stored by the electronic tag to the remote server **26** for processing. The tag reader **22** may also contains user input/output devices such as a display screen, a button, a speaker and a buzzer (not shown).

The above-mentioned electronic tags attached to the item **24** to be taken stock of stores an identification code uniquely representing the specific item and the equipment communicating with the tag reader. The internal processor of the tag reader **22** locates the asset item **24** according to the output power of the antenna in the reader, and the area covered by wave beam such as the distance of the interval between them, to determine if items to be taken stock of is located around the stocktaking staff.

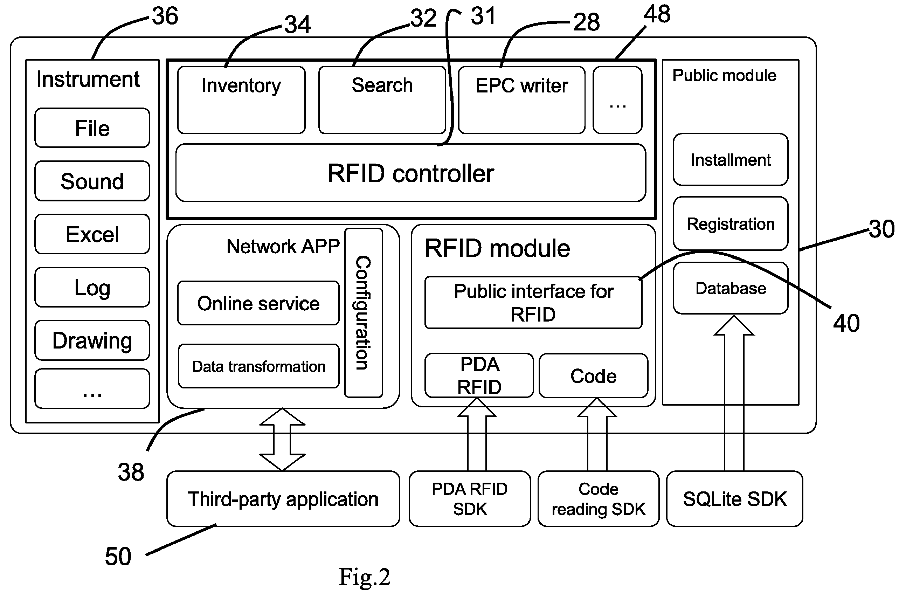

Figure 2 illustrates the software module diagram for the above-mentioned system of searching and locating items, especially the software structure of the tag reader and the network app of the server connected to the network remote end. Among them, the tag reader contains a RFID controlling module **48** and a RFID input output module **40**, wherein the RFID controlling module **48** contains a memory that stores the item list to be taken stock of within a predetermined area (not shown) and the storage module **34** is responsible for the operation on the list such as writing, modification and reading. The RFID controlling module **48** also contains a search module **32** and an EPC writer **28**. The search module **32** is responsible for the automatic search for one or more items within a predetermined area. The EPC writer **28** is used to write the electronic tags (not shown) attached to the products. The above-mentioned software structure also includes an instrument module **36** and a public module **30**. The instrument module **36** is used to read/write files, especially the database files from clients with different formats. The public module **30** is responsible for common functionality of the entire software structure such as the installment of the software and the registration in the system. On the other hand, the above-mentioned structure also comprises a network APP module **38** allowing the tag reader to communicate with the server (not shown) and the third-party application.

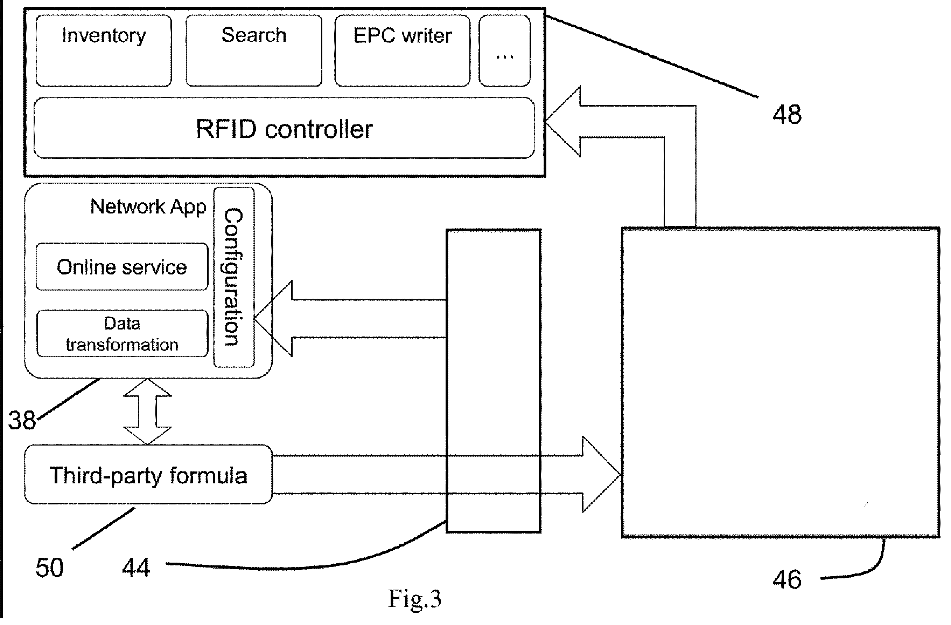

Figure 3 illustrates a schematic diagram for updating the asset list in the original assets from clients to add the location information of the products according to one embodiment in the present invention. The above-mentioned server in the system used for checking assets and searching assets or items can analyze, conclude and settle the inventory data received by the tag reader (not shown). The inventory data is provided by the RFID controlling module **48**. Then the server attaches these inventory data **46** to the asset list of the original asset from clients, such as the addition in a form of attaching rows behind a data table **44** without destroying the asset list of the original asset. Specifically, when initiating the list, it firstly define the column numbers of the list according to the format from clients and then define the column names to enable the original list **44** from clients to be entirely copied on the checking list, while all contents and sequences on the original list **44** are not changed but merely the last check and search time as well as check or search state results are added instead. This kind of attached inventory data **46** can be defined according to the demands from clients which can be exemplified as one or more rows and different contents such as inventory time, the final inventory position and the inventory interval time and so on. The above-mentioned original list **44** from clients can be provided by clients through the network App **38**. The above-mentioned attached data **46** can be provided to the third-party, such as its transmition to the third-party program **44** to realize different functions.

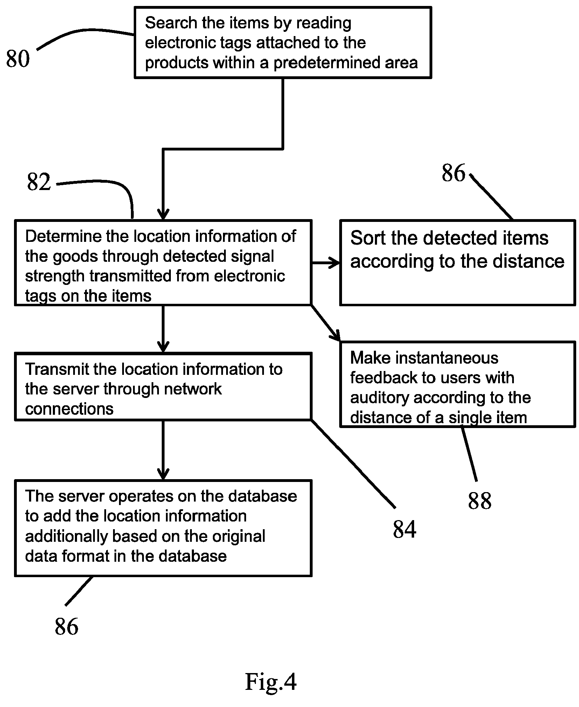

Figure 4 illustrates the operation flow chart for the above-mentioned system used for checking asset, searching assets or items. During operation and in Step **80**, the stocktaking staff takes stock of, and searches the items locating in the warehouse or other sites through the RFID tag reader. Specifically, the client will provide the file list for the asset equipment of the items to be taken stock of in advance, which means the item list to be taken stock of within the predetermined area has to be downloaded and stored in the RFID tag reader. After transmitting radio-frequency signals, the tag reader will receive signals transmitted by the electronic tag on any items (either automatically or passively). In step **82**, the tag reader determines the location information of the items through signals transmitted by the electronic tags of the detected items.

Different operations can be conducted according to the signals received by the tag reader. For example, if the check staff does not specify any particular item to be found on the handheld device, then in Step **86**, all items located within the communication range of RFID tag reader will show as a list on the display screen on the reader. Besides, different items can also be shown in a sequence according to the distance of each product from the reader. On the other hand, in step **88**, the check staff can also specify a certain product to be found, and then the reader will only show the location of the product and use audio reminder in assistance. For instance, a reader can be configured with a loudspeaker or a buzzer which is controlled by the internal processor in the reader. The loudspeaker or buzzer reminds the check staff via the voice of "Beep, Beep, Beep" when specific items enter into the scan scope. As the reader is closer and closer to the specific products, the frequency of "Beep, Beep, Beep" is faster and faster or its volume becomes higher and higher. The principle for the reader to determine the distance of the specific item is conducted by measuring the signal strength transmitted by RFID tags on specific products. The nearer the distance is, the stronger the signal strength is. If there is no signal at all, then it means the RFID tag does not enter into the working range of the reader.

On the other hand, in Step **82**, after the tag detects the signal strength transmitted by the electronic tags of the items detected by the reader to judge the location information of these items, this kind of checking data, as set forth, will be transmitted to the server located on the other end of network. Then the server will operate on the data list of product assets from clients and add location information to the original database additionally to complete the check for the asset items from clients.

The above-mentioned searching and locating device for items adopts RFID (namely radio-frequency technique) rather than relies on the GPS location system. Thus, RFID device is particularly suitable for indoor usage for products are always placed indoors. However, GPS signals cannot be received indoors, so problems of failing to locate indoors will occur.

Therefore, the stocktaking staff can search and locate products of interests in a warehouse or other predetermined area, or recognize all products within the area without specifying the products to identify. If a product of interest is not detected in its corresponding site that the product of interest should appear, then it means the product is not placed in its predetermined location. On the other hand, if the stocktaking staff detects products that do not belong to a predetermined area, then it means the product is not placed within its predetermined location. The reader system program can also remind and inquire if the stocktaking staff needs to modify the placement location of the item.

The above-mentioned warehouse or other sites are only exemplary. Actually, the scope of items can be divided according to different requirements from clients. For example, if clients only need to take stock of items on one storage rack, then items originally belonging to this storage rack are deemed to be deviated from its supposed location when they are discovered to be located on the floor or on another rack next door. Optionally, if client merely takes stock of all the items within a factory without distinguishing the specific product locations, then the items are deemed not to be deviated from their supposed locations when all items belonging to the factory are discovered within the factory.

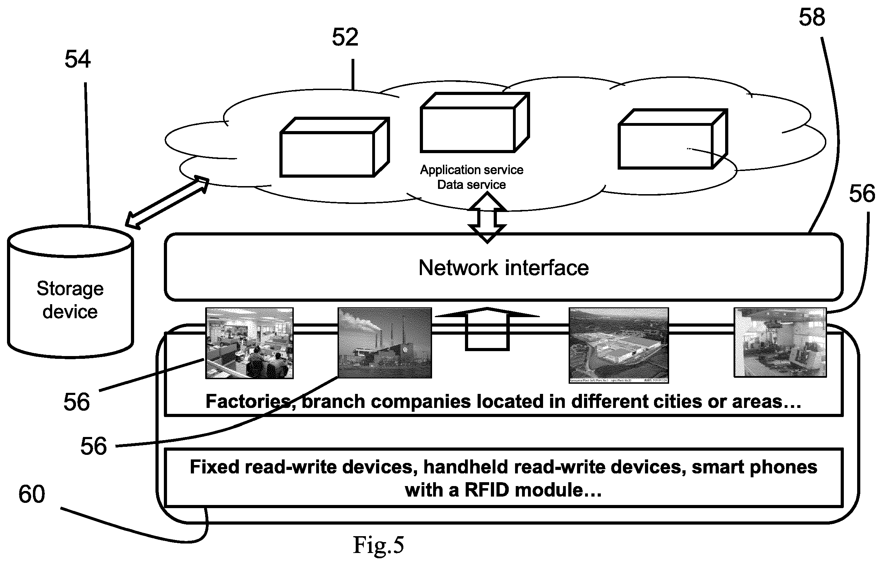

In the embodiments shown by Figure 5, after the location information of products within a certain area is obtained by using the tag reader **60**, such data is transmitted to the server **52** through network interface **58**. In this embodiment, multiple tag readers **60** can instantaneously obtain and transmit check data to a single server **52** even though these tag readers **60** are located in different geographical sites **56** respectively. These different physical sites contain, for example, factories or branches in different countries or cities from one company. Different asset items are stored in these different geographical sites. For example, different geographical sites contain different types of storage spaces, either buildings such as warehouse and factories, or outdoor sites such as an open-air warehouse, a yard, a railway station and a sea port wharf cargo area, all of which are suitable for the inventory system in the present invention. According to the embodiment, the searching task for asset inventory or assets from companies can be accomplished by using the same set software via wired or wireless networks, and through cloud operation and protection of firewalls, regardless of the types of the storage space.

Therefore, from the description of several embodiments, those skilled in the art can recognize that different modifications, other structures and equivalents can all be used without departing from the nature of the present invention. Consequently, the above-mentioned descriptions should not be regarded as limitations to the scope of the present invention ascertained by the following claims.

## Claims

1. A system for searching and locating an item, comprising:
an electronic tag adapted to be attached to an item;
a tag reader used for reading the electronic tag; and
a server;
wherein, the server is configured for communicating with the tag reader through a network connection; the tag reader configured for searching and locating the item within a predetermined area and determining the location information of the item through the signal strength transmitted by the electronic tag of the detected items; the location information transmitted to the server through the network connection; the server operating on the database and additionally adding the location information based on the original data format in the database.

2. The system according to claim 1, wherein the tag reader further comprises a memory storing a list of items that requiring stocktaking within a predetermined area.

3. The system according to claim 2, wherein according to the transmitted signal strength of the electronic tag of the item, the tag reader sorts at least a portion of the items in the list of items according to the distance between each one of the at least a portion of the items and the tag reader.

4. The system according to any one of the preceding claims, wherein the tag reader is configured to instantaneously detect the location of the item and feedback its location to the user through a user output device.

5. The system according to claim 4, wherein the user output device further comprises a speaker or a buzzer, and the output device reminds the user according to the distance between the item and the tag reader using sounds at different frequencies or in different volumes; or, the user output device further comprises a display screen, and the output device reminds the user according to the distance between one of the items and the tag reader by using different colors or symbols.

6. The system according to any one of the preceding claims, wherein the tag reader is configured to detect if the item is located on a predetermined location; when the tag reader detects that the item is not located on the predetermined location, the tag reader reminds the user and prompts if there is a need to modify a location of placement.

7. The system according to any one of the preceding claims, wherein the system comprises a plurality of tag readers located at different geographic locations, and the tag readers are used to take stock of items located in different storage space; optionally, the different storage space comprises factories or branches possessed by a single user in different countries or cities; preferably, the location information further comprises the last search time or search status results of the item.

8. A method for searching and locating an item, comprising the steps of:
searching the item by reading an electronic tag attached to the item within a predetermined area;
determining a location information of the item through detecting the signal strength transmitted by the electronic tag on the item; and
transmitting the location information to the server through a network connection; the server operating on the database and additionally adding the location information based on the original data format in the database.

9. The method according to claim 8, wherein the tag reader further comprises a memory storing a list of items that requiring stocktaking within a predetermined area.

10. The method according to claim 9, wherein according to the transmitted signal strength of the electronic tag of the item, the tag reader sorts at least a portion of the items in the list of items according to the distance between each one of the at least a portion of the items and the tag reader.

11. The method according to any one of the preceding claims, wherein the tag reader is configured to instantaneously detect the location of the item and feedback its location to the user through a user output device.

12. The method according to claim 11, wherein the user output device further comprises a speaker or a buzzer, and the output device reminds the user according to the distance between the item and the tag reader using sounds at different frequencies or in different volumes; or, the user output device further comprises a display screen, and the output device reminds the user according to the distance between one of the items and the tag reader by using different colors or symbols.

13. The method according to any one of the preceding claims, wherein the tag reader is configured to detect if the item is located on a predetermined location; when the tag reader detects that the item is not located on the predetermined location, the tag reader reminds the user and prompts if there is a need to modify a location of placement.

14. The method according to any one of the preceding claims, wherein the system comprises a plurality of tag readers located at different geographic locations, and the tag readers are used to take stock of items located in different storage space; optionally, the different storage space comprises factories or branches possessed by a single user in different countries or cities; preferably, the location information further comprises the last search time or search status results of the item.
